# EUROPÄISCHE PATENTSCHRIFT

(11) **EP 3 382 478 B1**
(45) Veröffentlichungstag und Bekanntmachung des Hinweises auf die Patenterteilung: **08.09.2021**
(21) Anmeldenummer: 17164078.2
(22) Anmeldetag: 31.03.2017
(51) Int. Cl.: G05B 19/042, H04L 29/06

(54) **VERFAHREN, COMPUTER-PROGRAMM-PRODUKT UND STEUEREINHEIT ZUM STEUERN VON ZUGRIFFEN AUF IT-SYSTEME BASIERENDE NETZWERKE, INSBESONDERE EINGEBETTETE SYSTEME ODER VERTEILTE SYSTEME UMFASSENDE AUTOMATISIERUNGSNETZWERKE, STEUERUNGSNETZWERKE ODER KONTROLLNETZWERKE**
METHOD, COMPUTER PROGRAM PRODUCT AND CONTROL UNIT FOR CONTROLLING ACCESS TO IT SYSTEM BASED NETWORKS, IN PARTICULAR AUTOMATION NETWORKS, MANAGEMENT NETWORKS OR CONTROL NETWORKS COMPRISING EMBEDDED SYSTEMS OR DISTRIBUTED SYSTEMS
PROCÉDÉ, PRODUIT-PROGRAMME D'ORDINATEUR ET UNITÉ DE COMMANDE D'ACCÈS À DES RÉSEAUX BASÉS SUR DES SYSTÈMES IT, EN PARTICULIER DES RÉSEAUX D'AUTOMATISATION COMPRENANT DES SYSTÈMES INTÉGRÉS OU DES RÉSEAUX RÉPARTIS, RÉSEAUX DE COMMANDE OU RÉSEAUX DE CONTRÔLE

(43) Veröffentlichungstag der Anmeldung: 03.10.2018
(73) Patentinhaber: Siemens Aktiengesellschaft, 80333 München (DE)
(72) Erfinder: Falk, Rainer, 85586 Poing (DE)

(56) Entgegenhaltungen:
- IGOR NAI FOVINO ET AL: "Modbus/DNP3 State-Based Intrusion Detection System", ADVANCED INFORMATION NETWORKING AND APPLICATIONS (AINA), 2010 24TH IEEE INTERNATIONAL CONFERENCE ON, IEEE, PISCATAWAY, NJ, USA, 20. April 2010 (2010-04-20), Seiten 729-736, XP031682596, ISBN: 978-1-4244-6695-5
- UPEKA KANCHANA PREMARATNE ET AL: "An Intrusion Detection System for IEC61850 Automated Substations", IEEE TRANSACTIONS ON POWER DELIVERY, IEEE SERVICE CENTER, NEW YORK, NY, US, Bd. 25, Nr. 4, 1. Oktober 2010 (2010-10-01), Seiten 2376-2383, XP011317983, ISSN: 0885-8977
- VERBA J ET AL: "Idaho National Laboratory Supervisory Control and Data Acquisition Intrusion Detection System (SCADA IDS)", TECHNOLOGIES FOR HOMELAND SECURITY, 2008 IEEE CONFERENCE ON, IEEE, PISCATAWAY, NJ, USA, 12. Mai 2008 (2008-05-12), Seiten 469-473, XP031266642, ISBN: 978-1-4244-1977-7
- YANG Y ET AL: "Multiattribute SCADA-Specific Intrusion Detection System for Power Networks", IEEE TRANSACTIONS ON POWER DELIVERY, IEEE SERVICE CENTER, NEW YORK, NY, US, Bd. 29, Nr. 3, 1. Juni 2014 (2014-06-01), Seiten 1092-1102, XP011548844, ISSN: 0885-8977, DOI: 10.1109/TPWRD.2014.2300099 [gefunden am 2014-05-21]
- IGURE V M ET AL: "Security issues in SCADA networks", COMPUTERS & SECURITY, ELSEVIER SCIENCE PUBLISHERS. AMSTERDAM, NL, Bd. 25, Nr. 7, 1. Oktober 2006 (2006-10-01), Seiten 498-506, XP027896387, ISSN: 0167-4048 [gefunden am 2006-10-01]

## Beschreibung

Die Erfindung bezieht sich auf ein Verfahren zum Steuern von Zugriffen auf IT-Systeme basierende Netzwerke, insbesondere Eingebettete Systeme oder Verteilte Systeme umfassende Automatisierungsnetzwerke, Steuerungsnetzwerke oder Kontrollnetzwerke gemäß dem Oberbegriff des Patentanspruches 1 und eine Steuereinheit zum Steuern von Zugriffen auf IT-Systeme basierende Netzwerke, insbesondere Eingebettete Systeme oder Verteilte Systeme umfassende Automatisierungsnetzwerke, Steuerungsnetzwerke oder Kontrollnetzwerke gemäß dem Oberbegriff des Patentanspruches 10.

Ein IT-System ist ein elektronisch-datenverarbeitendes System, zu dem weil VNA-basierend (beruht auf der Basis einer Von-Neumann-Architektur) z.B. jegliche Art von Verteilten Systemen und Eingebetteten Systemen, aber auch einzelne Computer, Großrechner, Hochleistungsrechner etc., teilweise auch Kommunikationssysteme sowie das Internet in seiner Gesamtheit zu zählen sind. IT-Systeme können jedoch auch auf anderen als einer VNA-Architektur basieren, z.B. auf einer Harvard-Architektur.

Im industriellen Umfeld werden in auf solche IT-Systeme basierenden Netzwerken, beispielsweise in der Ausprägung von Eingebettete Systeme oder Verteilte Systeme umfassende Automatisierungsnetzwerke, Steuerungsnetzwerke oder Kontrollnetzwerke eingesetzt, die "Internet-of-Things <IoT>"-Technologien verwenden, um z.B. Diagnosedaten im Zuge eines Netzwerkzugriffs zu einem Backend System zu übertragen.

Dazu ist es bekannt, z.B. eine als "Internet of Things <I-oT>"-Gerät ausgebildete Diagnosebox zu verwenden, die hierfür (**i**) eine Konnektivität zu dem jeweiligen Netzwerk herstellt, (**ii**) dabei unterschiedliche Netzwerksensoren, die in den Netzwerken integriert oder aber entweder drahtgebunden oder drahtlos an die Netzwerke angebunden sein können, erfasst und (**iii**) unterschiedliche Netzwerkschnittstellen aufweist, so z.B. eine Ethernet-Schnittselle, eine Mobilfunk-Schnittstelle gemäß dem 3G/4G/5G-Standard, eine WLAN-Schnittstelle, etc.

Die Diagnosebox sollte zudem hierfür nur mit separaten, ausschließlich für die Diagnose vorgesehenen Netzwerksensoren eines in Bezug auf Betrieb und/oder Sicherheit unkritisches, insbesondere als Standardnetzwerk bezeichnetes, Netzwerk verbunden sein und nicht mit einem netzwerkspezifischen Steuerungssystem, das zu einem in Bezug auf Betrieb und/oder Sicherheit kritischen Netzwerk gehört. Dieses sicherzustellen, erfordert jedoch zusätzlichen Aufwand, weil vorhandene Sensordaten und Betriebsdaten, die in dem Steuerungssystem vorhanden sind, nicht auswertbar sind.

Es besteht daher die Gefahr, dass der Benutzer der Diagnosebox bzw. des IoT-Gerätes diese bzw. dieses in unzulässiger Weise mit dem kritischen Steuerungssystem des in Bezug auf den Betrieb und/oder die Sicherheit kritischen Netzwerkes verbindet. Es besteht deshalb aus Netzwerksicht der Bedarf, dass die Beeinflussung des Steuerungssystems durch den Zugriff der Diagnosebox bzw. des IoT-Geräts auf das bezüglich Betrieb und/oder Sicherheit kritische Netzwerk bzw. das Herstellen der Konnektivität zu dem kritischen Netzwerk verhindert wird.

So gibt es ein Siemens-Produkt in Gestalt einer "Data Capturing Unit <DCU>"-Box, die rückwirkungsfrei Daten auf einem Ethernet-Netzwerk mitlesen kann. Dazu ist eine Netzwerk-schnittstelle vorgesehen, die physikalisch derart realisiert ist, dass ein Senden von Ethernet-Frames nicht möglich ist. Diese Lösung erfordert jedoch spezielle Hardware.

Darüber hinaus ist bei Microsoft Windows™ bekannt, mehrere Netzwerkkonfigurationen einzurichten. Zu jedem Netzwerk kann bei der Einrichtung durch einen Nutzer angegeben werden, ob es ein privates oder öffentliches Netzwerk ist. Davon abhängig werden die Netzwerk-Security-Einstellungen abhängig von dem verbundenen Netzwerk automatisch angepasst.

Aus dem Beitrag von I.N. Fovino et.al mit dem Titel "Modbus/DNP3 State-based Intrusion Detection System" in der 24. Ausgabe der IEEE-Publikationsreihe "International Conference on Advanced Information Networking and Applications" von 2010 ist es bekannt, dem allgemein geläufigen Problem der Sicherheit industrieller kritischer Infrastrukturen, das mit dem Aufkommen moderner ICT-Technologien (Information and Communication Technologies) zur Verbesserung der Leistung und Merkmale von SCADA-Computernetzwerken einhergeht, mit einem innovativen Ansatz für das Design eines Intrusion-Detektion-Systems (IDS) zu begegnen. Dabei ist es das Ziel, komplexe Angriffe auf das SCADA-Computernetzwerk durch die Überwachung allmähliche Veränderungen von Netzwerkzuständen erkennen zu können. Komplexe Angriffe, die hier betrachtet werden, sind dabei Angriffe, die aus einer Reihe von Befehlen bestehen, die wenngleich erlaubt jedoch bei isolierter Einzel-Paket-Betrachtung das korrekte Verhalten des SCADA-Computernetzwerks bei dessen Ausführung in bestimmten Betriebszuständen stören. Das vorgeschlagene IDS-System erkennt diese komplexen Angriffe dank einer internen Darstellung des gesteuerten SCADA-Computernetzwerks. Dazu korrespondierend wird auch eine Regelsprache vorgestellt, die leistungsfähig genug ist, um kritische Netzwerkzustände auszudrücken. Darüber hinaus wird ein Prototyp des vorgeschlagenen IDS-Systems vorgestellt, mit dem das SCADA-Computernetzwerk durch die Verwendung von ModBus- und DNP5-Kommunikationsprotokollen überwacht werden kann.

Aus dem Beitrag von U.K. Premaratne et.al mit dem Titel "An Intrusion Detection System for IEC61850 Automated Substations" in der Ausgabe Vol. 25, Nr. 4 der IEEE-Publikationsreihe "TRANSACTIONS ON POWER DELIVERY" von Oktober 2010 ist es bekannt, ein Intrusion-Detektion-System (IDS) zu verwenden, das darauf zugeschnitten ist, der Bedrohung für ein automatisiertes, ein Übertragungsprotokoll der Norm "IEC 61850" nutzendes Netzwerk von intelligenten elektronischen Geräte (Intelligent Electronic Devices <IED's> durch simulierte Angriffe auf die intelligenten elektronischen Geräte entgegenzuwirken. Die Intrusion-Detektion (ID) ist ein Prozess, einen böswilligen Angreifer zu erkennen. Es ist effektiver und ausgereifter Sicherheitsmechanismus, der jedoch beim Sichern des "IEC 61850-basierten IED-Netzwerkes nicht genutzt wird. Das entwickelte IDS-System verwendet hierzu Daten, die durch Starten simulierter Angriffe auf die intelligenten elektronischen Geräte (IED's) gesammelt werden und auf das Starten von Paket-basierten Schnüffelattacken (sniffing attacks) unter der Verwendung von gefälschten Paketen eines "Address Resolution Protocol <ARP>" basiert. Die Erkennungsfähigkeit des IDS-Systems wird dann durch Angriffssimulation bei echter Benutzeraktivität getestet. Darüber hinaus wird auch eine neue Methode zur Bewertung des zeitlichen Risikos einer Intrusion für das "IEC 61850-basierte IED-Netzwerk basierend auf der statistischen Analyse bekannter Angriffe vorgeschlagen.

Die der Erfindung zugrundeliegende Aufgabe besteht darin, ein Verfahren und eine Steuereinheit zum Steuern von Zugriffen auf IT-Systeme basierende Netzwerke, insbesondere Eingebettete Systeme oder Verteilte Systeme umfassende Automatisierungsnetzwerke, Steuerungsnetzwerke oder Kontrollnetzwerke anzugeben, bei dem bzw. mit der die Zugriffsteuerung in Bezug auf Sicherheit und Schutz von Netzwerkbetrieb und Netzwerkdaten verbessert wird.

Diese Aufgabe wird ausgehend von dem im Oberbegriff des Patentanspruchs 1 definierten Verfahren durch die im Kennzeichen des Patentanspruches 1 angegebenen Merkmale gelöst.

Weiterhin wird die Aufgabe ausgehend von der im Oberbegriff des Patentanspruchs 10 definierten Steuereinheit durch die im Kennzeichen des Patentanspruches 10 angegebenen Merkmale gelöst.

Darüber hinaus wird die Aufgabe durch ein Computer-Programm-Produkt gemäß dem Patentanspruch 19 gelöst.

Wenn im Zusammenhang mit der vorliegend angemeldeten Erfindung von einem Netzwerkzugriff die Rede ist, so sollen mit der Verwendung des Begriffs "Zugriff" alle korrespondierenden Netzwerkaktionen vom Herstellen einer Netzwerkkonnektivität bis hin zum Zugang zu Netzwerkdaten subsummiert sein.

Die der Erfindung zugrundeliegende Idee gemäß der in den Ansprüchen 1, 10 und 19 jeweils angegebenen technischen Lehre besteht darin, durch Beobachtung und Auswertung (Detektion) der Kommunikation in einem Netzwerk (Durchführen eines Netzwerkkommunikationsprotokoll-Abgleichs des beobachten Protokolls mit einer Vielzahl von üblicherweise in betriebs- und/oder sicherheitskritischen Netzwerken verwendeten, vorzugsweise in einer Liste gespeicherten, Referenz-Protokollen) selbständig zu erkennen, ob es sich im Zuge des Herstellens einer Netzwerkkonnektivität zu wenigstens einem von mindestens einem in Bezug auf Betrieb und/oder Sicherheit unkritischen, insbesondere als Standardnetzwerk bezeichneten, Netzwerk und mindestens einem in Bezug auf Betrieb und/oder Sicherheit kritischen Netzwerk um ein unkritisches oder kritisches Netzwerk handelt.

Abhängig vom Detektionsergebnis wird ein Warnhinweis, vorzugsweise ein "Critical-Network-Signal <CNS>", bereitgestellt.

Dabei wird insbesondere angezeigt, dass die Netzwerkkonnektivität zu einem in Bezug auf den Betrieb und/oder die Sicherheit kritischen Netzwerk hergestellt ist.

Mit der Erfindung wird verhindert, dass z.B., wenn versehentlich oder absichtlich jedoch in unzulässiger Weise, z.B. im Zuge von Diagnose, Service, Inbetriebnahme, Wartung, Konfiguration, etc., versucht wird, die Konnektivität zu dem betriebs- und/oder sicherheitskritischen Netzwerk herzustellen, das betriebs- und/oder sicherheitskritische Netzwerk hierdurch beeinträchtigt wird.

Dies trifft insbesondere dann zu, wenn z.B. ein unbedarfter Anwender versehentlich oder absichtlich, z.B. mit einem Service-Notebook, einem Diagnose-, Inbetriebnahme-, Wartung- oder Konfigurationsgerät, einem "Internet of Things <IoT>"-Gerät oder einem Gerät zum Erfassen von prädiktiven Instandhaltungsdaten auf eine betriebs- und/oder sicherheitskritische Automatisierungsanlage zugreift oder eine Verbindung zu der betriebs- und/oder sicherheitskritischen Automatisierungsanlage herstellt.

Die der Erfindung zugrundeliegende Idee betrifft insbesondere eine Steuereinheit gemäß dem Anspruch 10, die in vorteilhafter Weise als ein Service-Notebook, ein Diagnose-, Inbetriebnahme-, Wartung- oder Konfigurationsgerät, ein "Internet of Things <IoT>"-Gerät oder ein Gerät zum Erfassen von prädiktiven Instandhaltungsdaten ausgebildet ist und erkennt selbständig, ob sie an einer Netzwerk-Interface mit einem betriebskritischen und/oder Safety-kritischen Netzwerk verbunden ist. Dazu wird die Netzwerkkommunikation an diesem Netzwerk-Interface beobachtet. Dabei wird insbesondere die Kommunikation anderer Geräte des über die Netzwerk-Schnittstelle verbundenen Netzwerks bzw. die Kommunikation zwischen anderen Geräten des über die Netzwerk-Schnittstelle Netzwerks beobachtet. Anhand der beobachteten und anschließend ausgewerteten Netzwerkkommunikation (z.B. verwendetes Safety-Protokoll, Real-Time Control Protocol) wird erkannt, ob es sich bei dem besagten, z.B. durch Netzzugriff oder Herstellen der Netzwerkkonnektivität, Netzwerk um ein betriebskritisches und/oder Safety-kritisches Netzwerk handelt.

Die Steuereinheit kann mehrere Netzwerk-Schnittstellen aufweisen. Dabei kann die Erfindung auf allen oder einzelnen Netzwerk-Schnittstellen realisiert sein. Mit der erfindungsgemäßen Steuereinheit wird verhindert, dass bei einer fehlerhaften Verkabelung ein betriebskritisches und/oder Safety-kritisches Netzwerk gestört wird. Die Steuereinheit kann spezielle Netzwerkports aufweisen, an denen das Verbinden mit dem betriebskritischen und/oder Safety-kritischen Netzwerk zulässig ist.

Auch bei der Steuereinheit wird in Abhängigkeit von dem Detektionsergebnis ein Warnhinweis, vorzugsweise ein "Critical-Network-Signal <CNS>", erzeugt und über eine Ausgabeschnittstelle ausgegeben.

Dieses zeigt an, dass an der Netzwerk-Schnittstelle ein betriebskritisches und/oder Safety-kritisches Netzwerk vorliegt.

Sowohl das bereitgestellte als auch das erzeugte und ausgegebene "Critical-Network-Signal <CNS>" können auf unterschiedliche Art verwendet werden:
- Als farbliche Kodierung - z.B. Farbe "GRÜN" bei unkritischem Netzwerk bzw. Standardnetzwerk, Farbe "ROT" bei betriebs- und/oder sicherheitskritischem Netzwerk- (vgl. Ansprüche 3 und 12) und vorzugsweise im Fall der Steuereinheit gemäß dem Anspruch 12 zur Anzeige an der Netzwerk-Schnittstelle.
- Anzeige in Administrationsmenü / als Statusanzeige (vgl. Ansprüche 4 und 13).
- Automatisches Blockieren und/oder Sperren des Herstellens der Netzkonnektivität (vgl. Ansprüche 6 und 15) und vorzugsweise im Fall der Steuereinheit gemäß dem Anspruch 15 der Netzwerk-Schnittstelle. Auf diese Weise wird verhindert, dass beim Herstellen der Netzkonnektivität bzw. von der Steuereinheit eine Gefährdung für das betriebs- und/oder sicherheitskritische Netzwerk ausgeht.
- Einschränken der zulässigen Netzwerkkommunikationsprotokolle beim Herstellen der Netzkonnektivität (vgl. Ansprüche 7 und 16) und vorzugsweise im Fall der Steuereinheit gemäß dem Anspruch 16 auf der Netzwerk-Schnittstelle durch die Steuereinheit (es wird bzw. die Steuereinheit verhindert, dass die Netzwerkkommunikation in dem betriebs- und/oder sicherheitskritischen Netzwerk beeinflusst wird). Dazu können z.B. Firewall-Regeln angepasst werden oder es kann ein Nur-Lese-Zugriff konfiguriert werden bzw. es kann ein Nur-Lese-Modus für die Netzwerk-Schnittstelle konfiguriert werden).
- Es können andere Netzwerk-Schnittstellen der Steuereinheit gesperrt oder beschränkt werden (z.B. Blockieren einer Internet/Mobilfunk-Anbindung).
- Anzeige einer Fehlermeldung (vgl. Ansprüche 5 und 14).

Die vorstehend genannten Aktionen erfolgen vorzugsweise automatisch.

Weiterhin kann vorzugsweise ein Administrator (vgl. Anspruch 8) bzw. ein Administrator der Steuereinheit explizit die als problematisch erkannte Konfiguration freigeben. Dies geschieht z.B. dadurch, dass die Blockierung bzw. Sperrung durch von einem Netzwerkadministrator eingegebene Steuerbefehle wieder aufgehoben und das Herstellen der Netzkonnektivität zu dem betriebs- und/oder sicherheitskritischen Netzwerk und vorzugsweise im Fall der Steuereinheit gemäß dem Anspruch 17 die Netzwerk-Schnittstelle zum betriebs- und/oder sicherheitskritischen Netzwerk wieder freigegeben wird.

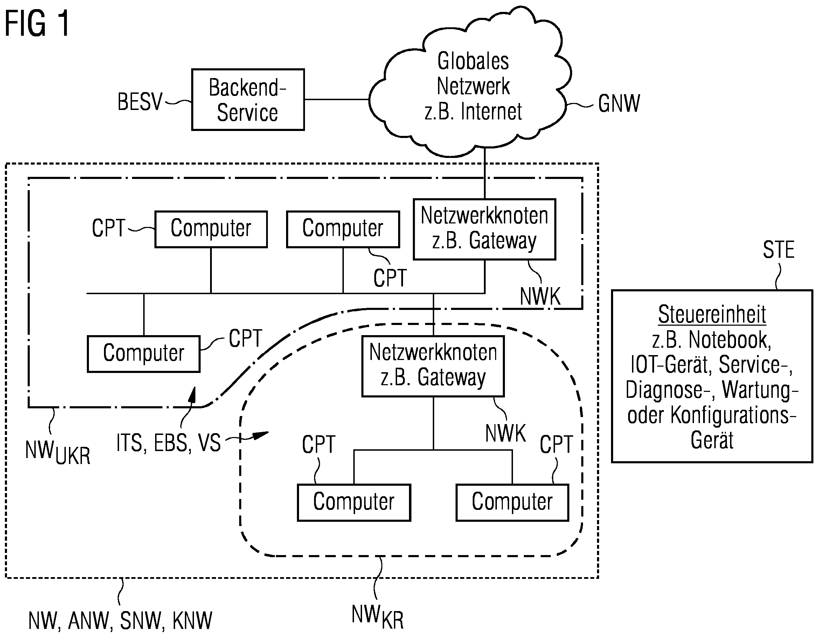

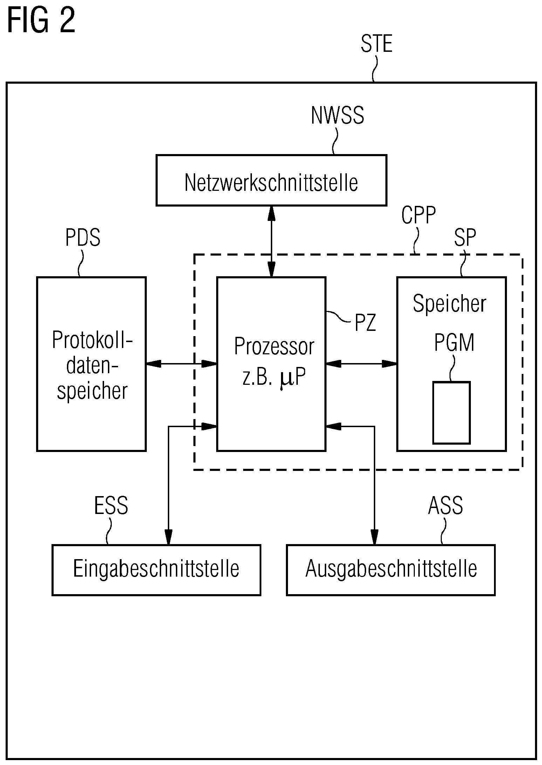

Weitere Vorteile der Erfindung ergeben sich aus der nachfolgenden Beschreibung eines Ausführungsbeispiels der Erfindung anhand der FIGUREN 1 und 2. Diese zeigen:
FIGUR 1 ein typisches Netzwerkszenario im industriellen IT-Umfeld, bei dem auf IT-Systeme basierende Netzwerke, insbesondere Eingebettete Systeme oder Verteilte Systeme umfassende Automatisierungsnetzwerke, Steuerungsnetzwerke oder Kontrollnetzwerke, beliebig zugegriffen wird,
FIGUR 2 den prinzipiellen Aufbau einer die Zugriffe gemäß der FIGUR 1 steuernde Steuereinheit.

FIGUR 1 zeigt ein typisches Netzwerkszenario im industriellen IT-Umfeld, bei dem auf IT-Systeme ITS basierende Netzwerke NW, NW_{UKR}, NW_{KR} im Sinne der im allgemeinen Beschreibungsteil angegebenen Begriffsdefinition für einen Netzzugriff zugegriffen wird. Gemäß diesem Netzwerkszenario enthält ein vorzugsweise als Automatisierungsnetzwerk ANW, Steuerungsnetzwerk SNW oder Kontrollnetzwerk KNW ausgebildetes Netzwerk NW ein in Bezug auf Betrieb und/oder Sicherheit unkritisches, als Standardnetzwerk bezeichnetes Netzwerk NW_{UKR} und ein in Bezug auf Betrieb und/oder Sicherheit kritisches Netzwerk NW_{KR}. Beide Teilnetzwerke NW_{UKR}, NW_{KR} basieren vorzugsweise auf einem Eingebetteten System EBS oder Verteilte System VS. Die Anzahl der kritischen bzw. unkritischen Netzwerke NW_{UKR}, NW_{KR} in dem Netzwerk NW ist nicht auf die dargestellten zwei Teilnetzwerke beschränkt, sondern kann allgemein so groß sein, dass mindestens ein unkritisches Netzwerk NW_{UKR} und mindestens ein kritisches Netzwerk NW_{KR} in dem Netzwerk NW enthalten ist.

Sowohl das unkritische Netzwerk NW_{UKR} als auch das kritische Netzwerk NW_{KR} in dem Netzwerk NW sind als "Mehr-ComputerSystem" ausgebildet, bei dem jeweils ein Computer CPT, der vorzugsweise als Feldgerät, Steuergerät, IoT-Gerät, Projektierungswerkzeug oder Servicewerkzeug ausgestaltet ist, um in dem Automatisierungsnetzwerk ANW, dem Steuerungsnetzwerk SNW oder dem Kontrollnetzwerk KNW des Netzwerks NW anfallenden Aufgaben und Funktionen zu steuern. Im Zuge dieser Aufgaben- und Funktionssteuerung kommuniziert der Computer CPT in regelmäßigen Abständen netzwerkübergreifend über einen Netzwerkknoten NWK, der beispielsweise als Gateway ausgebildet sein kann, und einem übergeordneten vorzugsweise als Internet fungierenden Globalen Netzwerk GNW mit einem Backend-Service BESV, um z.B. Statusdaten für eine "Predictive Maintenance" (vorausschauende Wartung) zu übertragen.

Dem in der FIGUR 1 dargestellten Netzwerkszenario innewohnend ist ein im Automatisierungsszenario, bei dem mit dem kritischen Netzwerk NW_{KR} eine Echtzeit-kritische Fertigungszelle (Realtime-Zelle), eine sogenannte Safety-Zelle, mit mehreren z.B. als Feldgeräten ausgebildeten Computern CPT gegeben ist, wohingegen mit dem unkritischen Netzwerk NW_{UKR} eine Echtzeitunkritische Fertigungszelle wieder (Non-Realtime-Zelle) mit mehreren z.B. als Feldgeräten ausgebildeten Computern CPT vorliegt.

Weiterer Bestandteil des dargestellten Netzwerkszenarios ist eine Steuereinheit STE, mit der sowohl auf das bezüglich Betrieb und/oder Sicherheit unkritische Netzwerk NW_{UKR} als auch auf das bezüglich Betrieb und/oder Sicherheit kritische Netzwerk NW_{KR} zugegriffen werden kann. Die Steuereinheit STE stellt dazu eine Konnektivität zu dem jeweiligen Netzwerk her, indem es sich über eine drahtgebundene oder drahtlose Verbindungstechnologie, wie z.B. Ethernet bzw. WLAN, Bluetooth oder Mobilfunk gemäß 3G/4G/5G-Standard, mit dem jeweiligen Netzwerk verbindet. Die Steuereinheit STE ist zu diesem Zweck vorzugsweise als Notebook, als "Internet of Things <I-oT>"-Gerät, als Diagnose-, Wartung- oder Konfigurationsgerät, als Gerät zum Erfassen von prädiktiven Instandhaltungsdaten ausgebildet. Bezogen auf das Automatisierungsszenario kann die Steuereinheit STE sowohl an der Realtime-Zelle als auch an der Non-Realtime-Zelle angeschlossen werden.

Es besteht daher die Gefahr, dass sich die Steuereinheit STE in unzulässiger Weise mit dem kritischen Steuerungssystem des in Bezug auf den Betrieb und/oder die Sicherheit kritischen Netzwerkes verbindet. Es besteht deshalb aus der Sicht eines Betreibers/Administrators des in der FIGUR 1 dargestellten Netzwerkes NW der Bedarf, dass die Beeinflussung des Netzwerkes NW durch den Zugriff der Steuereinheit STE auf das bezüglich Betrieb und/oder Sicherheit kritische Netzwerk NW_{KR} bzw. der Realtime-Zelle verhindert wird, wenn z.B. versucht wird, zu dem kritischen Netzwerk NW_{KR} bzw. zu der Realtime-Zelle eine Konnektivität herzustellen.

Mit anderen Worten, es ist aus Netzwerksicht sinnvoll und zweckmäßig eine Zugriffssteuerung zu implementieren, mit ein solches Gefahrenszenario vermieden wird. Wie dieses passiert, wird mit der Beschreibung von FIGUR 2 erläutert.

FIGUR 2 zeigt den prinzipiellen Aufbau der Steuereinheit STE, mit der eine solche Zugriffssteuerung durchgeführt werden kann. So weist die Steuereinheit STE einen nicht-flüchtigen, lesbaren Speicher SP, in dem prozessorlesbare Steuerprogrammbefehle eines die Zugriffssteuerung steuernden Programm-Moduls PGM gespeichert sind, einen mit dem Speicher SP verbundenen, vorzugsweise als Mikro-Prozessor "µP" ausgebildeten, Prozessor PZ, der die Steuerprogrammbefehle des Programm-Moduls PGM ausführt, einen mit dem Prozessor PZ verbundenen Protokolldatenspeicher PDS, in dem eine Vielzahl von üblicherweise in den betriebs- und/oder sicherheitskritischen Netzwerken NW_{KR} verwendeten, vorzugsweise in einer Liste, gespeichert sind, eine mit dem Prozessor PZ verbundene Netzwerkschnittstelle NWSS, über der Netzzugriff auf das unkritische Netzwerk NW_{UKR} und das kritische Netzwerk NW_{KR} bzw. das Herstellen der Netzwerkkonnektivität erfolgt sowie eine Eingabeschnittstelle ESS und eine Ausgabeschnittstelle ASS für benutzerspezifische Vorgänge im Zusammenhang mit der Zugriffssteuerung.

Zentrales Element in der Steuereinheit STE für die durchzuführende Zugriffssteuerung ist das Programm-Modul PGM, das als APP separat bzw. unabhängig von der Steuereinheit STE erwerbbar ist und in die Steuereinheit STE hochladbar ist und damit zusammen mit den in Steuereinheit üblicherweise bereits vorhandenem Prozessor und Speicher ein Computer-Programm-Produkt CPP bildet.

Die vorstehend aufgeführten Komponenten der Steuereinheit STE bilden eine Funktionseinheit und sind derart ausgebildet, dass bei jedem Netzwerkzugriff, so z.B. wenn jedes Mal eine Netzwerkkonnektivität hergestellt wird oder versucht wird herzustellen, mindestens ein in dem jeweiligen Netzwerk NW_{UKR}, NW_{KR} zur Netzwerkkommunikation verwendetes Netzwerkkommunikationsprotokoll ermittelt wird. Hierbei handelt es sich beispielsweise um von anderen Knoten (z.B. anderen Computern) in dem jeweiligen Netzwerk NW_{UKR}, NW_{KR} verwendete Netzwerkkommunikationsprotokolle oder zwischen anderen Knoten (z.B. anderen Computern) des jeweiligen Netzwerkes NW_{UKR}, NW_{KR} verwendete Netzwerkkommunikationsprotokolle.

Danach wird von der gebildeten Funktionseinheit das jeweils ermittelte Netzwerkkommunikationsprotokoll mit der Vielzahl von Referenz-Protokollen, die üblicherweise in den betriebs- und/oder sicherheitskritischen Netzwerken NW_{KR} verwendet werden und in dem Protokolldatenspeicher PDS, z.B. in einer Liste, gespeichert ist, abgeglichen.

Ergibt dabei der Abgleich des ermittelten Netzwerkkommunikationsprotokolls mit den Referenz-Protokollen, dass zumindest ein ermitteltes Netzwerkkommunikationsprotokoll mit einem dedizierten Referenz-Protokoll der Referenz-Protokolle übereinstimmt, dass dann mit dem jeweiligen Netzwerkzugriff, insbesondere dem jeweiligen Herstellen der Netzwerkkonnektivität, ein Warnhinweis, der z.B. ein "Critical-Network-Signal <CNS>" sein kann, erzeugt und über die Ausgabeschnittstelle ASS ausgegeben wird. Das Erzeugen und Ausgeben über die Ausgabeschnittstelle ASS kann in allgemeiner Form auch als Bereitstellen aufgefasst.

Zählen entgegen der Darstellung in der FIGUR 1 mehrere unkritische Netzwerke NW_{UKR} und kritische Netzwerke NW_{KR} zu dem Netzwerk NW, unterscheiden sich zudem die kritische Netzwerke NW_{KR} und greift die Steuereinheit STE z.B. über eine entsprechende Anzahl von separaten Netzwerkschnittstellen NWSS auf die die Netzwerke NW_{UKR}, NW_{KR} und insbesondere auf die kritischen Netzwerke NW_{KR} zu, z.B. durch jeweiliges Herstellen der Netzwerkkonnektivität, so können vorzugsweise auch mehrere, entsprechend der Anzahl von unterschiedlichen kritische Netzwerke NW_{KR} Warnhinweise bzw. CNS-Signale zu deren jeweiligen Kennzeichnung erzeugt und ausgegeben bzw. bereitgestellt werden.

Der Warnhinweis bzw. die Warnhinweise werde vorzugsweise dann erzeugt und ausgegeben bzw. bereitgestellt, wenn versehentlich oder absichtlich jedoch in unzulässiger Weise, z.B. im Zuge von Diagnose, Service, Inbetriebnahme, Wartung, Konfiguration, etc., versucht wird, auf das betriebs- und/oder sicherheitskritische Netzwerk bzw. die Netzwerke NW_{KR} zuzugreifen.

Werden darüber hinaus für das kritische Netzwerke NW_{KR} mehrere Netzwerkprotokolle bestimmt oder ermittelt und stimmt nur eines dieser ermittelten Protokolle mit den gespeicherten Referenz-Protokollen überein, so wird der Warnhinweis erzeugt und ausgegeben bzw. bereitgestellt. Nur wenn kein ermitteltes Netzwerkprotokoll mit den gespeicherten Referenz-Protokollen übereinstimmt - bei dem kritischen Netzwerke NW_{KR} handelt sich in diesem Fall definitionsgemäß nicht mehr um ein kritisches Netzwerk, sondern um ein unkritisches Netzwerk -, unterbleibt die Erzeugung und Ausgabe bzw. Bereitstellung des Warnhinweises. So werden vorzugsweise für die Netzwerkzugriffe bzw. für das Herstellen der Netzwerkkonnektivitäten, auf unterschiedliche in Bezug auf den Betrieb und/oder die Sicherheit kritische Netzwerke NW_{KR} unterschiedliche Warnhinweise erzeugt und ausgegeben bzw. bereitgestellt.

Handelt es sich bei dem Netzwerkzugriff bzw. dem Herstellen der Netzwerkkonnektivität um ein unkritisches Netzwerk, so erfolgt der Zugriff auf Netzwerkdaten, insbesondere für Netzwerkdiagnose, -service, -wartung, -konfiguration etc., ohne die Erzeugung und Ausgabe bzw. Bereitstellung des Warnhinweises.

Der Warnhinweis ist vorzugsweise als ein akustisches Warnsignal, z.B. in Form und Gestalt eines Signaltons, ausgebildet.

Weiterhin kann mit dem Warnhinweis der netzwerkbezogene Zugriff farblich, vorzugsweise mit der Farbe "GRÜN" für den Netzwerkzugriff auf das unkritische Netzwerk bzw. Standardnetzwerk NW_{UKR} und mit der Farbe "ROT" für den Netzwerkzugriff auf das betriebs- und/oder sicherheitskritische Netzwerk NW_{KR}, kodiert werden. Dabei ist es besonderes von Vorteil, wenn die farbliche Kodierung an der Netzwerk-Schnittstelle NWSS angezeigt wird.

Alternativ oder zusätzlich kann mit dem Warnhinweis der netzwerkbezogene Zugriff in einem Administrationsmenü oder ein Netzzugriffstatus angezeigt werden.

Darüber hinaus kann mit dem Warnhinweis eine Fehlermeldung angezeigt werden.

In der Steuereinheit STE sind der Prozessor PZ, das Programm-Modul PGM und die Netzwerk-Schnittstelle NWSS derart ausgebildet sind, dass mit der Bereitstellung des Warnhinweises der Netzwerkzugriff auf das betriebs- und/oder sicherheitskritische Netzwerk NW_{KR} und/oder die Netzwerk-Schnittstelle NWSS automatisch blockiert und/oder gesperrt wird.

In einer alternativen Ausprägung können der Prozessor PZ, das Programm-Modul PGM und die Netzwerk-Schnittstelle NWSS in der Steuereinheit STE derart ausgebildet sein, dass mit der Bereitstellung des Warnhinweises die Zulässigkeit der für die Netzwerkzugriffe und/oder auf der Netzwerk-Schnittstelle NWSS durch die Steuereinheit STE verwendeten Netzwerkkommunikationsprotokolle eingeschränkt wird. Dieses passiert vorzugsweise durch Firewall-Regeln oder durch Beschränkung auf einen Nur-Lese-Zugriff. Bei einem aktivierten Nur-Lese-Modus kann eine Beeinflussung des betriebs- und/oder sicherheitskritischen Netzwerks NW_{KR} zuverlässig verhindert werden, d.h. die Rückwirkungsfreiheit ist sichergestellt.

In einer weiteren Ausgestaltung der Steuereinheit STE bildet die Eingabeschnittstelle ESS, die mit dem Prozessor PZ verbunden ist und durch diese Verbindung zusammen mit dem vom Prozessor PZ ausgeführten Programm-Modul PGM und der Netzwerk-Schnittstelle NWSS eine Funktionseinheit, die derart ausgestaltet ist, dass die Blockierung bzw. Sperrung durch von einem Netzwerkadministrator eingegebene Steuerbefehle oder Freischaltcodes wieder aufgehoben und der Netzwerkzugriff auf das betriebs- und/oder sicherheitskritische Netzwerk NW_{KR} und/oder die Netzwerk-Schnittstelle NWSS zum betriebs- und/oder sicherheitskritischen Netzwerk NW_{KR} wieder freigegeben wird. Dadurch lässt sich eine flexible, für unterschiedliche Bedürfnisse ausgelegte Zugriffssteuerung realisieren.

In Bezug auf das bei der Beschreibung der FIGUR 1 erwähnte Automatisierungsszenario bedeuten die vorstehenden Ausführungen, dass ein als Steuereinheit ausgebildetes Service-Notebook detektiert, welche Kommunikationsprotokolle auf dem verbundenen Netzwerk verwendet werden. Wenn ein kritisches Protokoll, z.B. ein Safety-Protokoll oder ein Realtime-Automatisierungsprotokoll erkannt wird, so sperrt das Service-Notebook ein für das Automatisierungsszenario verwendetes Netzwerkinterface. Dadurch verhindert das Service-Notebook, dass das betriebskritische Netzwerk durch das Service-Notebook beeinträchtigt wird, wenn es versehentlich mit dem Netzwerk der Realtime-Zelle verbunden wird.

## Patentansprüche

1. Verfahren zum Steuern von Zugriffen auf IT-Systeme (ITS) basierende Netzwerke (NW, NW_{UKR}, NW_{KR}), insbesondere Eingebettete Systeme (EBS) oder Verteilte Systeme (VS) umfassende Automatisierungsnetzwerke (ANW), Steuerungsnetzwerke (SNW) oder Kontrollnetzwerke (KNW), bei dem
auf wenigstens einem von mindestens einem in Bezug auf Betrieb und/oder Sicherheit unkritischen, insbesondere als Standardnetzwerk bezeichneten, Netzwerk (NW_{UKR}) und mindestens einem in Bezug auf Betrieb und/oder Sicherheit kritischen Netzwerk (NW_{KR}) durch eine Steuereinheit (STE) zum Herstellen einer Netzwerkkonnektivität zugegriffen wird,
**dadurch gekennzeichnet, dass**
a) mit dem jeweiligen Herstellen der Netzwerkkonnektivität mindestens ein in dem jeweiligen Netzwerk (NW, NW_{UKR}, NW_{KR}) zur Netzwerkkommunikation verwendetes Netzwerkkommunikationsprotokoll durch die Steuereinheit (STE) ermittelt wird,
b) das jeweils ermittelte Netzwerkkommunikationsprotokoll durch die Steuereinheit (STE) mit einer Vielzahl von üblicherweise in den betriebs- und/oder sicherheitskritischen Netzwerken (NW_{KR}) verwendeten, vorzugsweise in einer Liste gespeicherten, Referenz-Protokollen abgeglichen wird,
c) wenn der Abgleich des ermittelten Netzwerkkommunikationsprotokolls mit den Referenz-Protokollen ergibt, dass zumindest ein ermitteltes Netzwerkkommunikationsprotokoll mit einem dedizierten Referenz-Protokoll der Referenz-Protokolle übereinstimmt, dann wird durch die Steuereinheit (STE) mit dem jeweiligen Herstellen der Netzwerkkonnektivität zumindest ein Warnhinweis, insbesondere zumindest ein "Critical-Network-Signal <CNS>", bereitgestellt, insbesondere wenn versehentlich oder absichtlich jedoch in unzulässiger Weise, z.B. im Zuge von Diagnose, Service, Inbetriebnahme, Wartung, Konfiguration, etc. versucht wird, die Konnektivität zu dem betriebs- und/oder sicherheitskritischen Netzwerk (NW_{KR}) herzustellen, anderenfalls erfolgt das Herstellen der Netzwerckonnektivität, insbesondere für Netzwerkdiagnose, -service, - inbetriebnahme, -wartung, -konfiguration etc., durch die Steuereinheit (STE) ohne die Bereitstellung des Warnhinweises.

2. Verfahren nach Anspruch 1, **dadurch gekennzeichnet, dass** ein akustisches Warnsignal, z.B. ein Signalton, als Warnhinweis benutzt wird.

3. Verfahren nach Anspruch 1, **dadurch gekennzeichnet, dass** mit dem Warnhinweis das Herstellen der Netzwerkkonnektivität farblich, insbesondere Farbe "GRÜN" für das Herstellen der Netzwerkkonnektivität zu dem unkritischen Netzwerk bzw. Standardnetzwerk (NW_{UKR}) und Farbe "ROT" für das Herstellen der Netzwerkkonnektivität zu dem betriebs- und/oder sicherheitskritischen Netzwerk (NW_{KR}), kodiert wird.

4. Verfahren nach Anspruch 1 oder 3, **dadurch gekennzeichnet, dass**
mit dem Warnhinweis das Herstellen der Netzwerkkonnektivität in einem Administrationsmenü oder ein Netzkonnektivitätsstatus angezeigt wird.

5. Verfahren nach einem der Ansprüche 1 bis 4, **dadurch gekennzeichnet, dass**
mit dem Warnhinweis eine Fehlermeldung angezeigt wird.

6. Verfahren nach einem der Ansprüche 1 bis 5, **dadurch gekennzeichnet, dass**
mit der Bereitstellung des Warnhinweises das Herstellen der Netzwerkkonnektivität zu dem betriebs- und/oder sicherheitskritischen Netzwerk (NW_{KR}) automatisch blockiert und/oder gesperrt wird.

7. Verfahren nach einem der Ansprüche 1 bis 5, **dadurch gekennzeichnet, dass**
mit der Bereitstellung des Warnhinweis die Zulässigkeit der für das Herstellen der Netzwerkkonnektivität verwendeten Netzwerkkommunikationsprotokolle, insbesondere durch Firewall-Regeln oder durch Beschränkung auf einen Nur-Lese-Zugriff, eingeschränkt wird.

8. Verfahren nach Anspruch 6, **dadurch gekennzeichnet, dass** die Blockierung bzw. Sperrung durch einen Netzwerkadministrator wieder aufgehoben und das Herstellen der Netzwerkkonnektivität zu dem betriebs- und/oder sicherheitskritischen Netzwerk (NW_{KR}) wieder freigegeben wird.

9. Verfahren nach einem der Ansprüche 1 bis 8, **dadurch gekennzeichnet, dass**
für das Herstellen der Netzwerkkonnektivitäten zu unterschiedlichen in Bezug auf den Betrieb und/oder die Sicherheit kritischen Netzwerken (NW_{KR}) unterschiedliche Warnhinweise bereitgestellt werden.

10. Steuereinheit (STE), insbesondere ein Service-Notebook, ein Diagnose-, Inbetriebnahme-, Wartung- oder Konfigurationsgerät, ein "Internet of Things <IoT>"-Gerät oder ein Gerät zum Erfassen von prädiktiven Instandhaltungsdaten, zum Steuern von Zugriffen auf IT-Systeme (ITS) basierende Netzwerke (NW, NW_{UKR}, NW_{KR}), insbesondere Eingebettete Systeme (EBS) oder Verteilte Systeme (VS) umfassende Automatisierungsnetzwerke (ANW), Steuerungsnetzwerke (SNW) oder Kontrollnetzwerke (KNW), mit mindestens einer Netzwerk-Schnittstelle (NWSS), über die zum Herstellen einer Netzwerkkonnektivität auf wenigstens einem von mindestens einem in Bezug auf Betrieb und/oder Sicherheit unkritischen, insbesondere als Standardnetzwerk bezeichneten, Netzwerk (NW_{UKR}) und mindestens einem in Bezug auf Betrieb
und/oder Sicherheit kritischen Netzwerk (NW_{KR}) zugreifbar ist,
**gekennzeichnet durch**
einen nicht-flüchtigen, lesbaren Speicher (SP), in dem prozessor-lesbare Steuerprogrammbefehle eines die Zugriffssteuerung steuernden Programm-Moduls (PGM) gespeichert sind, und ein mit dem Speicher (SP) verbundener Prozessor (PZ), der die Steuerprogrammbefehle des Programm-Moduls (PGM) ausführt, mit der Netzwerk-Schnittstelle (NWSS), einem Protokolldatenspeicher (PDS) und einer Ausgabeschnittstelle (ASS) verbunden ist und zur Zugriffssteuerung mit der Netzwerk-Schnittstelle (NWSS) als Funktionseinheit derart ausgebildet ist, dass
**a**) bei jedem Herstellen der Netzwerkkonnektivität mindestens ein in dem jeweiligen Netzwerk (NW, NW_{UKR}, NW_{KR}) zur Netzwerckommunikation verwendetes Netzwerkkommunikationsprotokoll ermittelt wird,
**b**) das jeweils ermittelte Netzwerkkommunikationsprotokoll mit einer Vielzahl von üblicherweise in den betriebs- und/oder sicherheitskritischen Netzwerken (NW_{KR}) verwendeten, vorzugsweise in einer Liste des Protokolldatenspeichers (PDS) gespeicherten, Referenz-Protokollen abgeglichen wird,
c) wenn der Abgleich des ermittelten Netzwerkkommunikationsprotokolls mit den Referenz-Protokollen ergibt, dass zumindest ein ermitteltes Netzwerkkommunikationsprotokoll mit einem dedizierten Referenz-Protokoll der Referenz-Protokolle übereinstimmt, dann mit dem jeweiligen Herstellen der Netzwerkkonnektivität zumindest ein Warnhinweis, insbesondere zumindest ein "Critical-Network-Signal <CNS>", erzeugt und über die Ausgabeschnittstelle (ASS) ausgegeben wird, insbesondere wenn versehentlich oder absichtlich jedoch in unzulässiger Weise, z.B. im Zuge von Diagnose, Service, Inbetriebnahme, Wartung, Konfiguration, etc. versucht wird, die Konnektivität zu dem betriebs- und/oder sicherheitskritischen Netzwerk (NW_{KR}) herzustellen, anderenfalls erfolgt das Herstellen der Netzwerkkonnektivität, insbesondere für Netzwerkdiagnose, - service, -Inbetriebnahme, -wartung, -konfiguration etc., ohne die Erzeugung und Ausgabe des Warnhinweises.

11. Steuereinheit (STE) nach Anspruch 10, **dadurch gekennzeichnet, dass**
der Warnhinweis ein akustisches Warnsignal, z.B. ein Signalton, ist.

12. Steuereinheit (STE) nach Anspruch 10, **dadurch gekennzeichnet, dass**
der Prozessor (PZ) und das Programm-Modul (PGM) derart ausgebildet sind, dass mit dem Warnhinweis das Herstellen der Netzwerkkonnektivität farblich, insbesondere Farbe "GRÜN" für das Herstellen der Netzwerkkonnektivität zu dem unkritischen Netzwerk bzw. Standardnetzwerk (NW_{UKR}) und Farbe "ROT" für das Herstellen der Netzwerkkonnektivität zu dem betriebs- und/oder sicherheitskritischen Netzwerk (NW_{KR}), kodiert, und insbesondere an der Netzwerk-Schnittstelle (NWSS) angezeigt, wird.

13. Steuereinheit (STE) nach Anspruch 10 oder 12, **dadurch gekennzeichnet, dass**
der Prozessor (PZ), das Programm-Modul (PGM) und die Ausgabeschnittstelle (ASS) derart ausgebildet sind, dass mit dem Warnhinweis das Herstellen der Netzwerkkonnektivität in einem Administrationsmenü oder ein Netzkonnektivitätsstatus angezeigt wird.

14. Steuereinheit (STE) nach einem der Ansprüche 10 bis 13, **dadurch gekennzeichnet, dass**
der Prozessor (PZ), das Programm-Modul (PGM) und die Ausgabeschnittstelle (ASS) derart ausgebildet sind, dass mit dem Warnhinweis eine Fehlermeldung angezeigt wird.

15. Steuereinheit (STE) nach einem der Ansprüche 10 bis 14, **dadurch gekennzeichnet, dass**
der Prozessor (PZ), das Programm-Modul (PGM) und die Netzwerk-Schnittstelle (NWSS) derart ausgebildet sind, dass mit der Bereitstellung des Warnhinweises das Herstellen der Netzwerkkonnektivität zu dem betriebs- und/oder sicherheitskritischen Netzwerk (NW_{KR}), und insbesondere die Netzwerk-Schnittstelle (NWSS), automatisch blockiert und/oder gesperrt wird.

16. Steuereinheit (STE) nach einem der Ansprüche 10 bis 14, **dadurch gekennzeichnet, dass**
der Prozessor (PZ), das Programm-Modul (PGM) und die Netzwerk-Schnittstelle (NWSS) derart ausgebildet sind, dass mit der Bereitstellung des Warnhinweises die Zulässigkeit der für das Herstellen der Netzwerkkonnektivität, und insbesondere auf der Netzwerk-Schnittstelle (NWSS) durch die Steuereinheit (STE), verwendeten Netzwerkkommunikationsprotokolle, insbesondere durch Firewall-Regeln oder durch Beschränkung auf einen Nur-Lese-Zugriff, eingeschränkt wird.

17. Steuereinheit (STE) nach Anspruch 16, **dadurch gekennzeichnet, dass**
eine Eingabeschnittstelle (ESS) enthalten ist, die mit dem Prozessor (PZ) verbunden ist und durch diese Verbindung zusammen mit dem vom Prozessor (PZ) ausgeführten Progamm-Modul (PGM) und der Netzwerk-Schnittstelle (NWSS) eine Funktionseinheit bildet, die derart ausgestaltet ist, dass die Blockierung bzw. Sperrung durch von einem Netzwerkadministrator eingegebene Steuerbefehle oder Freischaltcodes wieder aufgehoben und das Herstellen der Netzwerkkonnektivität zu dem betriebs- und/oder sicherheitskritischen Netzwerk (NW_{KR}), sowie insbesondere die Netzwerk-Schnittstelle (NWSS) zum betriebs- und/oder sicherheitskritischen Netzwerk (NW_{KR}), wieder freigegeben wird.

18. Steuereinheit (STE) nach einem der Ansprüche 10 bis 14, **dadurch gekennzeichnet, dass**
der Prozessor (PZ), das Programm-Modul (PGM), die Ausgabeschnittstelle (ASS) und die Netzwerk-Schnittstelle (NWSS) derart ausgebildet sind, dass für das Herstellen der Netzwerkkonnektivitäten zu unterschiedlichen in Bezug auf den Betrieb und/oder die Sicherheit kritischen Netzwerken (NW_{KR}) unterschiedliche Warnhinweise erzeugt und ausgebeben werden.

19. Computer-Programm-Produkt (CPP) mit prozessor-lesbaren Steuerprogrammbefehlen, die, wenn sie auf einem Prozessor (PZ), insbesondere auf einem Prozessor (PZ) einer Steuereinheit (STE) nach einem der Ansprüche 10 bis 18, ausgeführt werden, das Verfahren nach einem der Ansprüche 1 bis 9 ausführen.

## Claims

1. Method for controlling access operations on networks (NW, NW_{UKR}, NW_{KR}) based on IT systems (ITS), in particular automation networks (ANW), control networks (SNW) or supervisory networks (KNW) comprising embedded systems (EBS) or distributed systems (VS), in which
at least one from at least one network (NW_{UKR}) that is uncritical in regard to operation and/or safety, in particular referred to as a standard network, and at least one network (NW_{KR}) that is critical in regard to operation and/or safety is accessed by a control unit (STE) to set up a network connectivity,
**characterized in that**
**a)** the respective set-up of the network connectivity prompts at least one network communication protocol used in the respective network (NW, NW_{UKR}, NW_{KR}) for network communication to be ascertained by the control unit (STE),
**b)** the respectively ascertained network communication protocol is collated by the control unit (STE) with a multiplicity of reference protocols, preferably stored in a list, that are usually used in the operation- and/or safety-critical networks (NW_{KR}),
**c)** if the collation of the ascertained network communication protocol with the reference protocols reveals that at least one ascertained network communication protocol is concordant with a dedicated reference protocol of the reference protocols, the respective set-up of the network connectivity then prompts at least one warning, in particular at least one "critical network signal <CNS>", to be provided by the control unit (STE), in particular if an inadvertent or intentional but inadmissible attempt is made, e.g. in the course of diagnosis, service, start-up, maintenance, configuration, etc., to set up the connectivity to the operation- and/or safety-critical network (NW_{KR}), otherwise the network connectivity is set up, in particular for network diagnosis, network service, network start-up, network maintenance, network configuration, etc., by the control unit (STE) without the provision of the warning.

2. Method according to Claim 1, **characterized in that** an audible warning signal, e.g. a signal tone, is used as a warning.

3. Method according to Claim 1, **characterized in that** the warning prompts the set-up of the network connectivity to be colour coded, in particular "GREEN" colour for set-up of the network connectivity to the uncritical network or standard network (NW_{UKR}) and "RED" colour for set-up of the network connectivity to the operation- and/or safety-critical network (NW_{KR}) .

4. Method according to Claim 1 or 3, **characterized in that** the warning prompts the set-up of the network connectivity to be displayed in an administration menu or prompts a network connectivity status to be displayed.

5. Method according to one of Claims 1 to 4, **characterized in that**
the warning prompts an error message to be displayed.

6. Method according to one of Claims 1 to 5, **characterized in that**
the provision of the warning prompts the set-up of the network connectivity to the operation- and/or safety-critical network (NW_{KR}) to be blocked and/or disabled automatically.

7. Method according to one of Claims 1 to 5, **characterized in that**
the provision of the warning prompts the admissibility of the network communication protocols used for the set-up of the network connectivity to be restricted, in particular by firewall rules or by limitation to a read-only access.

8. Method according to Claim 6, **characterized in that** the blocking or disabling is cancelled again by a network administrator and the set-up of the network connectivity to the operation- and/or safety-critical network (NW_{KR}) is enabled again.

9. Method according to one of Claims 1 to 8, **characterized in that**
different warnings are provided for the set-up of the network connectivities to different networks (NW_{KR}) that are critical in regard to operation and/or safety.

10. Control unit (STE), in particular a service notebook, a diagnosis device, start-up device, maintenance device or configuration device, an "Internet of Things <IoT>" device or a device for capturing predictive maintenance data, for controlling access operations on networks (NW, NW_{UKR}, NW_{KR}) based on IT systems (ITS), in particular automation networks (ANW), control networks (SNW) or supervisory networks (KNW) comprising embedded systems (EBS) or distributed systems (VS), having at least one network interface (NWSS) via which at least one from at least one network (NW_{UKR}) that is uncritical in regard to operation and/or safety, in particular referred to as a standard network, and at least one network (NW_{KR}) that is critical in regard to operation and/or safety is accessible to set up a network connectivity,
**characterized by**
a non-volatile, readable memory (SP) that stores processor-readable control program commands of a program module (PGM) controlling the access control, and
a processor (PZ), connected to the memory (SP), that executes the control program commands of the program module (PGM), is connected to the network interface (NWSS), to a protocol data memory (PDS) and to an output interface (ASS) and is configured for access control with the network interface (NWSS) as a functional unit such that
**a)** each set-up of the network connectivity prompts at least one network communication protocol used in the respective network (NW, NW_{UKR}, NW_{KR}) for network communication to be ascertained,
**b)** the respectively ascertained network communication protocol is collated with a multiplicity of reference protocols, preferably stored in a list of the protocol data memory (PDS), that are usually used in the operation- and/or safety-critical networks (NW_{KR}),
**c)** if the collation of the ascertained network communication protocol with the reference protocols reveals that at least one ascertained network communication protocol is concordant with a dedicated reference protocol of the reference protocols, the respective set-up of the network connectivity then prompts at least one warning, in particular at least one "critical network signal <CNS>", to be generated and output via the output interface (ASS), in particular if an inadvertent or intentional but inadmissible attempt is made, e.g. in the course of diagnosis, service, start-up, maintenance, configuration, etc., to set up the connectivity to the operation- and/or safety-critical network (NW_{KR}), otherwise the network connectivity is set up, in particular for network diagnosis, network service, network start-up, network maintenance, network configuration, etc., without the generation and output of the warning.

11. Control unit (STE) according to Claim 10, **characterized in that**
the warning is an audible warning signal, e.g. a signal tone.

12. Control unit (STE) according to Claim 10, **characterized in that**
the processor (PZ) and the program module (PGM) are configured such that the warning prompts the set-up of the network connectivity to be colour coded, and in particular displayed on the network interface (NWSS), in particular "GREEN" colour for set-up of the network connectivity to the uncritical network or standard network (NW_{UKR}) and "RED" colour for set-up of the network connectivity to the operation- and/or safety-critical network (NW_{KR}) .

13. Control unit (STE) according to Claim 10 or 12, **characterized in that**
the processor (PZ), the program module (PGM) and the output interface (ASS) are configured such that the warning prompts the set-up of the network connectivity to be displayed in an administration menu or prompts a network connectivity status to be displayed.

14. Control unit (STE) according to one of Claims 10 to 13, **characterized in that**
the processor (PZ), the program module (PGM) and the output interface (ASS) are configured such that the warning prompts an error message to be displayed.

15. Control unit (STE) according to one of Claims 10 to 14, **characterized in that**
the processor (PZ), the program module (PGM) and the network interface (NWSS) are configured such that the provision of the warning prompts the set-up of the network connectivity to the operation- and/or safety-critical network (NW_{KR}), and in particular the network interface (NWSS), to be blocked and/or disabled automatically.

16. Control unit (STE) according to one of Claims 10 to 14, **characterized in that**
the processor (PZ), the program module (PGM) and the network interface (NWSS) are configured such that the provision of the warning prompts the admissibility of the network communication protocols used for the set-up of the network connectivity, and in particular on the network interface (NWSS) by the control unit (STE), to be restricted, in particular by firewall rules or by limitation to a read-only access.

17. Control unit (STE) according to Claim 16, **characterized in that**
an input interface (ESS) is included that is connected to the processor (PZ) and, by virtue of this connection, forms, together with the program module (PGM) executed by the processor (PZ) and the network interface (NWSS), a functional unit that is configured such that the blocking or disabling is cancelled again by control commands or enabling codes input by a network administrator and the set-up of the network connectivity to the operation- and/or safety-critical network (NW_{KR}), and in particular the network interface (NWSS) to the operation- and/or safety-critical network (NW_{KR}), is enabled again.

18. Control unit (STE) according to one of Claims 10 to 14, **characterized in that**
the processor (PZ), the program module (PGM), the output interface (ASS) and the network interface (NWSS) are configured such that different warnings are generated and output for the set-up of the network connectivities to different networks (NW_{KR}) that are critical in regard to operation and/or safety.

19. Computer program product (CPP) having processor-readable control program commands that, when executed on a processor (PZ), in particular on a processor (PZ) of a control unit (STE) according to one of Claims 10 to 18, carry out the method according to one of Claims 1 to 9.

## Revendications

1. Procédé de commande d'accès à des réseaux (NW, NW_{UKR}, NW_{KR}) basés sur des systèmes IT (ITS), et plus particulièrement des réseaux d'automatisation (ANW) des réseaux de commande (SNW) ou des réseaux de contrôle (KNW),comprenant des systèmes embarqués (EBS) ou des systèmes distribués (VS), dans lequel :
il est accédé par une unité de commande (STE), pour réaliser une connectivité de réseau, à au moins un parmi au moins un réseau (NW_{UKR}) non critique par rapport au fonctionnement et/ou à la sécurité, et plus particulièrement désigné comme réseau standard, et au moins un réseau (NW_{KR}) critique par rapport au fonctionnement et/ou à la sécurité,
**caractérisé en ce que**
a) au moyen de la réalisation respective de la connectivité de réseau, au moins un protocole de communication de réseau utilisé dans le réseau respectif (NW, NW_{UKR}, NW_{KR}) aux fins de la communication de réseau est déterminé par l'unité de commande (STE),
b) le protocole de communication de réseau respectivement déterminé est comparé par l'unité de commande (STE) avec une pluralité de protocoles de référence habituellement utilisés dans les réseaux (NW_{KR}) critiques en termes de fonctionnement et/ou de sécurité, préférentiellement sauvegardés dans une liste,
c) s'il résulte de la comparaison du protocole de communication de réseau déterminé avec les protocoles de référence qu'au moins un protocole de communication de réseau déterminé coïncide avec un protocole de référence des protocoles de référence dédié, au moins un avertissement, et plus particulièrement au moins un « Critical- Network-Signal <CNS> » est fourni par l'unité de commande (STE) avec la réalisation respective de la connectivité de réseau, en particulier s'il y a une tentative, accidentelle ou intentionnelle, mais non permise, par exemple, dans le cadre du diagnostic, du service, de la mise en service, de la maintenance, de la configuration, etc., de réaliser la connectivité vers le réseau (NW_{KR}) critique en termes de fonctionnement et/ou de sécurité, autrement, la réalisation de la connectivité de réseau, en particulier à des fins de diagnostic, service, mise en service, maintenance, configuration de réseau, etc., est réalisée par l'unité de commande (STE) sans fourniture de l'avertissement.

2. Procédé selon la revendication 1, **caractérisé en ce qu'**est utilisé en tant qu'avertissement un signal d'avertissement acoustique, par exemple, un signal sonore.

3. Procédé selon la revendication 1, **caractérisé en ce que**, avec l'avertissement, la réalisation de la connectivité de réseau est codée en couleur, et plus particulièrement avec la couleur « VERTE » pour la réalisation de la connectivité de réseau vers le réseau non critique resp. réseau standard (NW_{UKR}) et la couleur « ROUGE » pour la réalisation de la connectivité de réseau vers le réseau (NW_{KR}) critique en termes de fonctionnement et/ou de sécurité.

4. Procédé selon la revendication 1 ou 3, **caractérisé en ce qu'**avec l'avertissement sont indiqués la réalisation de la connectivité de réseau dans un menu d'administration ou un statut de connectivité de réseau.

5. Procédé selon l'une des revendications 1 à 4, **caractérisé en ce qu'**avec l'avertissement est indiqué un message d'erreur.

6. Procédé selon l'une des revendications 1 à 5, **caractérisé en ce que**, avec la fourniture de l'avertissement, la réalisation de la connectivité de réseau vers le réseau (NW_{KR}) critique en termes de fonctionnement et/ou de sécurité est automatiquement bloquée et/ou suspendue.

7. Procédé selon l'une des revendications 1 à 5, **caractérisé en ce que**, avec la fourniture de l'avertissement, l'admissibilité des protocoles de communication de réseau utilisés pour la réalisation de la connectivité de réseau est limitée, en particulier par des règles pare-feu ou par limitation à un accès en lecture seule.

8. Procédé selon la revendication 6, **caractérisé en ce que** le blocage resp. la suspension sont annulés par un administrateur de réseau et la réalisation de la connectivité de réseau vers le réseau (NW_{KR}) critique en termes de fonctionnement et/ou de sécurité est de nouveau débloquée.

9. Procédé selon l'une des revendications 1 à 8, **caractérisé en ce que**, pour la réalisation des connectivités de réseau vers des réseaux (NW_{KR}) différents critiques par rapport au fonctionnement et/ou à la sécurité, des avertissement différents sont fournis.

10. Unité de commande (STE), et plus particulièrement un notebook de service, un appareil de diagnostic, de mise en service, de maintenance ou de configuration, un appareil « Internet of Things <IoT> » ou un appareil pour saisir des données d'entretien prédictives, pour commander des accès à des réseaux (NW, NW_{UKR}, NW_{KR}) basés sur des systèmes IT (ITS), et plus particulièrement des réseaux d'automatisation (ANW) des réseaux de commande (SNW) ou des réseaux de contrôle (KNW),comprenant des systèmes embarqués (EBS) ou des systèmes distribués (VS),avec au moins une interface de réseau (NWSS) via laquelle il peut être accédé, pour la réalisation d'une connectivité de réseau, à au moins un parmi au moins un réseau (NW_{UKR}) non critique par rapport au fonctionnement et/ou à la sécurité, et plus particulièrement désigné comme réseau standard, et au moins un réseau (NW_{KR}) critique par rapport au fonctionnement et/ou à la sécurité,
**caractérisée par**
une mémoire non volatile lisible (SP) dans laquelle sont sauvegardées des instructions de programme de commande lisibles par processeur d'un module de programme (PGM) commandant la commande d'accès et un processeur (PZ) relié à la mémoire (SP), lequel exécute les instructions de programme de commande du module de programme (PGM), est relié à l'interface de réseau (NWSS), une mémoire de données de protocole (PDS) et une interface de sortie (ASS) et est conçu, pour la commande d'accès, en tant qu'unité fonctionnelle avec l'interface de réseau (NWSS) de telle sorte que :
a) à chaque réalisation de la connectivité de réseau est déterminé au moins un protocole de communication de réseau utilisé dans le réseau respectif (NW, NW_{UKR}, NW_{KR}) aux fins de la communication de réseau,
b) le protocole de communication de réseau respectivement déterminé est comparé avec une pluralité de protocoles de référence habituellement utilisés dans les réseaux (NW_{KR}) critiques en termes de fonctionnement et/ou de sécurité, préférentiellement sauvegardés dans une liste de la mémoire de données de protocole (PDS),
c) s'il résulte de la comparaison du protocole de communication de réseau déterminé avec les protocoles de référence qu'au moins un protocole de communication de réseau déterminé coïncide avec un protocole de référence des protocoles de référence dédié, alors, au moins un avertissement, et plus particulièrement au moins un « Critical- Network-Signal <CNS> » est généré avec la réalisation respective de la connectivité de réseau et émis via l'interface de sortie (ASS), en particulier s'il y a une tentative, accidentelle ou intentionnelle, mais non permise, par exemple, dans le cadre du diagnostic, du service, de la mise en service, de la maintenance, de la configuration, etc., de réaliser la connectivité vers le réseau (NW_{KR}) critique en termes de fonctionnement et/ou de sécurité, autrement, la réalisation de la connectivité de réseau, en particulier à des fins de diagnostic, service, mise en service, maintenance, configuration de réseau, etc., est réalisée sans génération et émission de l'avertissement.

11. Unité de commande (STE) selon la revendication 10, **caractérisée en ce que** l'avertissement est un signal d'avertissement acoustique, par exemple, un signal sonore.

12. Unité de commande (STE) selon la revendication 10, **caractérisée en ce que** le processeur (PZ) et le module de programme (PGM) sont conçus de telle sorte que, avec l'avertissement, la réalisation de la connectivité de réseau est codée en couleur, et plus particulièrement avec la couleur « VERTE » pour la réalisation de la connectivité de réseau vers le réseau non critique resp. réseau standard (NW_{UKR}) et la couleur « ROUGE » pour la réalisation de la connectivité de réseau vers le réseau (NW_{KR}) critique en termes de fonctionnement et/ou de sécurité, et est indiquée plus particulièrement au niveau de l'interface de réseau (NWSS).

13. Unité de commande (STE) selon la revendication 10 ou 12, **caractérisée en ce que** le processeur (PZ), le module de programme (PGM) et l'interface de sortie (ASS) sont conçus de telle sorte qu'avec l'avertissement sont indiqués la réalisation de la connectivité de réseau dans un menu d'administration ou un statut de connectivité de réseau.

14. Unité de commande (STE) selon l'une des revendications 10 à 13, **caractérisée en ce que** le processeur (PZ), le module de programme (PGM) et l'interface de sortie (ASS) sont conçus de telle sorte qu'avec l'avertissement est indiqué un message d'erreur.

15. Unité de commande (STE) selon l'une des revendications 10 à 14, **caractérisée en ce que** le processeur (PZ), le module de programme (PGM) et l'interface de réseau (NWSS) sont conçus de telle sorte que, avec la fourniture de l'avertissement, la réalisation de la connectivité de réseau vers le réseau (NW_{KR}) critique en termes de fonctionnement et/ou de sécurité, et plus particulièrement l'interface de réseau (NWSS), sont automatiquement bloquées et/ou suspendues.

16. Unité de commande (STE) selon l'une des revendications 10 à 14, **caractérisée en ce que** le processeur (PZ), le module de programme (PGM) et l'interface de réseau (NWSS) sont conçus de telle sorte que, avec la fourniture de l'avertissement, l'admissibilité des protocoles de communication de réseau utilisés pour la réalisation de la connectivité de réseau, en particulier sur l'interface de réseau (NWSS) par l'unité de commande (STE), est limitée, en particulier par des règles pare-feu ou par limitation à un accès en lecture seule.

17. Unité de commande (STE) selon la revendication 16, **caractérisée en ce qu'**est incluse une interface d'entrée (ESS) qui est reliée au processeur (PZ) et qui forme, par cette liaison, conjointement avec le module de programme (PGM) exécuté par le processeur (PZ) et l'interface de réseau (NWSS), une unité fonctionnelle qui est conçue de telle sorte que le blocage resp. la suspension sont annulés par des instructions de commande ou des codes de déblocage entrés par un administrateur de réseau et la réalisation de la connectivité de réseau vers le réseau (NW_{KR}) critique en termes de fonctionnement et/ou de sécurité ainsi que, plus particulièrement, l'interface de réseau (NWSS) vers le réseau (NW_{KR}) critique en termes de fonctionnement et/ou de sécurité sont de nouveau débloquées.

18. Unité de commande (STE) selon l'une des revendications 10 à 14, **caractérisé en ce que** le processeur (PZ), le module de programme (PGM), l'interface de sortie (ASS) et l'interface de réseau (NWSS) sont conçues de telle sorte que, pour la réalisation des connectivités de réseau vers des réseaux (NW_{KR}) différents critiques par rapport au fonctionnement et/ou à la sécurité, des avertissement différents sont générés et émis.

19. Produit de programme informatique (CPP) avec des instructions de programme de commande lisibles par processeur qui, lorsqu'elles sont exécutées sur un processeur (PZ), et plus particulièrement sur un processeur (PZ) d'une unité de commande (STE) selon l'une des revendications 10 à 18, exécutent le procédé selon l'une des revendications 1 à 9.
